Europäisches Patentamt

European Patent Office

Office européen des brevets

(11) Publication number: **0 291 793**

**A1**

# EUROPEAN PATENT APPLICATION

(21) Application number: 88107369.6

(22) Date of filing: 07.05.88

(51) Int. Cl.⁴: **F16D 11/10 , F16D 67/02 , B60K 17/28**

(30) Priority: 21.05.87 IT 2062287

(43) Date of publication of application:
23.11.88 Bulletin 88/47

(84) Designated Contracting States:
DE FR

(71) Applicant: COMER S.p.A.
Viale Majno 31
I-20122 Milan(IT)

(72) Inventor: Fabbri, Fabrizio
Via Zurlini 47
I-41100 Modena(IT)

(74) Representative: Modiano, Guido et al
MODIANO, JOSIF, PISANTY & STAUB
Modiano & Associati Via Meravigli, 16
I-20123 Milan(IT)

(54) Safety coupling for connecting machines to a drive unit.

(57) The safety coupling comprises a coupling body (1) fixed to the motion input shaft (2) and ending with an axial hub (4) on which is rotatably mounted a bush (5) the bush (5) and body (1) having a shaped external profile. A sleeve (10) axially movable with respect to said coupling body (1) and having an inner profile complementary to the outer profile of said coupling body and of said bush, is movable between a first position in which it rigidly couples said coupling body to said bush, and a second disengagement position, in which it engages exclusively with said coupling body. The sleeve (10) may have a flange (20) engagable by a friction-lined (25, 32) non-rotatable ring (21) movable axially of the body (1) by a fork (22).

Fig.1

## SAFETY COUPLING FOR CONNECTING MACHINES TO A DRIVE UNIT

The present invention relates to a safety coupling for connecting machines to a drive unit.

As is known, machines are currently produced, mostly for agricultural use, which have rotating or in any case moving elements which are not driven by a motor provided directly on the machine but, by means of a coupling generally performed with a universal joint, by a separate drive unit.

The drive unit is generally constituted by the power take-off of a tractor.

In the current situation, the actuation of such a machine must therefore be performed not directly from the machine itself, having the rotating element, such as for example a circular saw or the like, but from the drive unit, constituted in this case by the tractor.

This type of coupling accordingly does not have sufficient assurances of safety, in case of danger, since the possibility of stopping the rotating machine is considerably limited and in any case currently not executable directly from the machine having the rotating element.

The aim proposed by the invention is indeed to solve the above described problem by providing a safety coupling which allows to uncouple the machine from the drive unit directly whilst the element is moving, offering thereby the possibility of timely intervention in case of need.

Within the above described aim, a particular object of the invention is to provide a coupling which, though it has considerably improved functional characteristics, is structurally simple and such as to not modify the currently employed coupling criteria.

Still another object of the present invention is to provide a coupling which, by virtue of its peculiar constructive characteristics, is capable of giving the greatest assurances of reliability and safety in use.

Not least object of the present invention is to provide a safety coupling which is easily obtainable from elements and materials commonly available on the market and which is furthermore competitive from a merely economical point of view.

The above described aim, as well as the objects mentioned and others which will become apparent hereinafter, are achieved by a safety coupling for connecting machines to a drive unit, according to the invention, characterized in that it comprises a coupling body with shaped outer profile rigidly associated with the motion input shaft and ending with an axial hub on which there rotatably engages a bush with shaped outer profile associable with a drive unit, a sleeve being furthermore provided, axially movable with respect to said coupling body and having an inner profile complementary to the outer profile of said coupling body and of said bush, said sleeve being arrangeable in a first position of motion transmission, in which it couples to said coupling body and to said bush, making them rigidly associated in rotation, and in a second disengagement position, in which it engages exclusively with said coupling body.

Further characteristics and advantages of the invention will become apparent from the description of a preferred but not exclusive embodiment of a safety coupling for connecting machines to a drive unit, illustrated only by way of non-limitative example in the accompanying drawings, wherein:

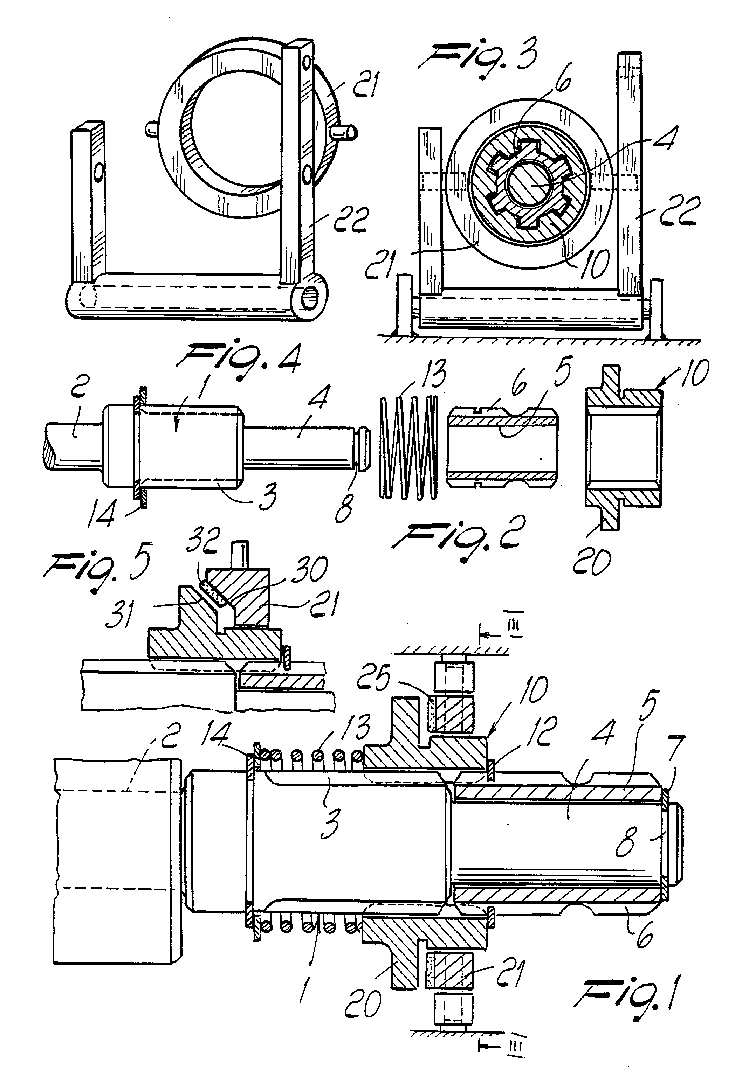

figure 1 is a schematic sectional view of a coupling, according to the invention;

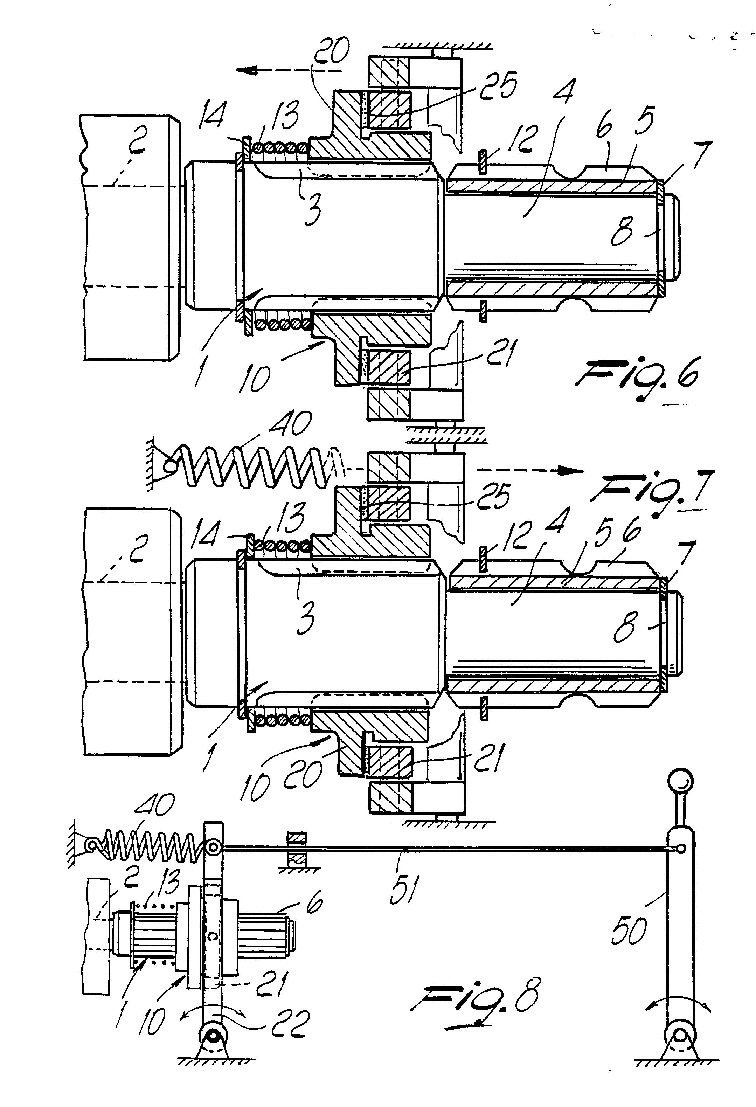

figure 2 is a partially sectional exploded view of the coupling;

figure 3 is a sectional view taken along the line III-III of figure 1;

figure 4 is a schematic exploded perspective view of the means for the axial translatory motion of said sleeve;

figure 5 is a sectional view of the detail of the brake means acting between the sleeve and the movement means;

figure 6 is a view of the coupling, according to the invention, in disengagement position;

figure 7 is a view of a different embodiment of the means for the movement of the sleeve in disengagement position;

figure 8 is a schematic view of the actuation of the translatory motion of the sleeve.

With reference to the above described figures, the safety coupling for connecting machines to a drive unit, according to the invention, comprises a coupling body, generally indicted by the reference numeral 1, which is rigidly associated with the input shaft of a machine whilst the element is moving, which is generally indicated at 2 in the drawing and can be of various types.

The coupling body 1 has, on its outer surface, a grooved profile 3 and is axially provided with an axial hub 4.

The axial hub 4 acts as supporting element for a bush 5 which, on its outer periphery, has a groove 6 with configuration substantially equal to the grooved profile 3 of the coupling body 1.

Between the bush 5 and the hub 4 there may be provided lubrication elements such as grease or lubricating means of a per se known type.

The bush 5 is axially retained by a Seeger ring 7 which engages in a groove 8 provided at the free end of the hub 4.

With the bush 5 there is associable a universal joint which derives from a drive unit which can be advantageously constituted by the power take-off of a tractor.

The bush 5 is freely rotatable on the hub 4 and, to transmit the motion to the coupling body 1, a sleeve 10 is provided which defines in its interior a grooved profile with configuration complementary to the outer surface of the bush 5 and of the coupling body 1.

The sleeve 10 is arrangeable in a first motion transmission position in which it couples both to the coupling body 1 and to the sleeve 10 and, to establish the axial position of the sleeve on the bush 5, there is provided a stop ring 12 which acts as abutment for the positioning of the sleeve 10 which is elastically pushed by a first spring 13 acting on the other end of the sleeve and engaging by abutment on a stop ring 14 rigidly associated with the body 1.

In these conditions, i.e. with the sleeve 10 coupled both to the bush 5 and to the coupling body 1, the rotary motion imparted to the bush 5 is transmitted from the sleeve 10 to the coupling body 1.

The sleeve 10 is advantageously provided with a flange 20 arranged at one end against which there is engageable a ring 21 externally embracing the sleeve 10 and mounted oscillably on a fork 22 pivoted at its base and oscillable to more the ring 21 in thrusting contact against the flange 20, obtaining the axial movement of the sleeve 10 in contrast with the spring 13, so as to disengage the sleeve 10 from the bush 5.

In these conditions the sleeve 10 is in the disengagement position and engages exclusively with the coupling body; accordingly the rotary motion transmitted to the bush 5 is not transmitted to the coupling body and consequently to the shaft connected thereto.

On the face of the ring 21 which engages with the flange 20 there may be provided an antifriction ring 25 or possibly, if this is required, a friction material may be used so as to provide a braking action.

If it is desired to increase the braking action, it is possible to configure the face of the ring 21 directed towards the flange 20 according to a truncated-cone surface 30, as illustrated schematically in figure 5, and have a corresponding truncated-cone surface 31 on the flange, so as to increase the surface of the friction material 32 which acts in practice as brake element.

With this type of execution it occurs that, to achieve disengagement from rotation, it is necessary to act in contrast with the spring 13 to obtain its compression, so that in normal conditions, i.e. with no external forces acting, the coupling assembly remains in coupling position.

If, due to safety reasons, it is desired to have a normal condition in which the sleeve 10 moves to the uncoupling position, it is possible to use a second traction spring 40, with greater elastic coefficient than the first spring 13, which acts between the ring 21 and a fixed point of the machine, so that in conditions of normal use, in which no external actuations are provided, the traction spring 40 causes the compression of the first spring 13 and the consequent uncoupling of the sleeve.

To perform the coupling it is possible to provide a lever 50 with locking position in the coupling and disengagement condition which, by means of a traction element or cable 51, acts on the fork, overcoming the elastic contrast of the spring, so that it is sufficient to exert a traction on the traction spring 40 such as to achieve the translatory motion of the sleeve to the coupling position in which it engages both with the bush and with the coupling body.

From what has been described it can thus be seen that the invention achieves the proposed aim and objects, and in particular the fact is stressed that with simple constructive solutions, constituted by the adoption of the bush rotatably supported on the axial hub associated with the coupling body, as well as by the presence of the slideable sleeve, allows to have a coupling element which is directly controllable from the machine having the moving element, thus contributing to an increase in safety characteristics.

The invention thus conceived is susceptible to numerous modifications and variations, all of which are within the scope of the inventive concept.

Furthermore, all the details may be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. Safety coupling for connecting machines to a drive unit, characterized in that it comprises a coupling body (1) with shaped external profile rigidly associated with the motion input shaft (2) and ending with an axial hub (4) on which there rotatably engages a bush (5) with shaped external profile associable with a drive unit, a sleeve (10) being furthermore provided, axially movable with respect to said coupling body and having an inner profile complementary to the outer profile of said coupling body and of said bush, said sleeve being arrangeable in a first position of motion transmission, in which it couples to said coupling body and to said bush, making them rigidly associated in rotation, and in a second disengagement position, in which it engages exclusively with said coupling body.

2. Safety coupling, according to claim 1, characterized in that the shaped outer profile of said coupling body of said bush (5) is constituted by a grooved profile (6).

3. Safety coupling, according to the preceding claims, characterized in that it comprises a first spring (13) acting between a stop ring (12) and the axial end of said sleeve to push it elastically to engage with said bush.

4. Safety coupling, according to one or more of the preceding claims, characterized in that it comprises, at one axial end of said sleeve, a flange (20) removably engageable by a ring (21) supported by an oscillating fork (22) actuatable for the translatory motion of said sleeve.

5. Safety coupling, according to one or more of the preceding claims, characterized in that it comprises antifriction means (25) interposed between said ring (21) and said flange (20).

6. Safety coupling, according to one or more of the preceding claims, characterized in that it comprises friction gaskets (32) interposed between said ring (21) and said flange (20) adapted to act as brake element.

7. Safety coupling, according to one or more of the preceding claims, characterized in that said ring (21) has, on the face directed towards said flange, a substantially truncated-cone configuration (30) and said flange (20) has a complementary truncated-cone configuration (31).

8. Safety coupling, according to one or more of the preceding claims, characterized in that it comprises tension-element means (51) engageable with the free end of said fork for the translatory actuation of said sleeve.

9. Safety coupling, according to one or more of the preceding claims, characterized in that it comprises a traction spring (40) acting between said fork and a fixed point of said machine, said spring having an elastic constant greater than the elastic constant of said first spring (13) for the compression of said first spring upon the end of external actions on said fork (22), to move said sleeve to said disengagement position.

Fig. 3

Fig. 4

Fig. 2

Fig. 5

Fig. 1

Fig.6

Fig.7

Fig.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 511 955  (BROUSSE) <br> * Whole document * | 1,2,5 | F 16 D  11/10 <br> F 16 D  67/02 <br> B 60 K  17/28 |
| Y | --- | 3,4,6-9 | |
| X | FR-A-1 401 038  (A.E.I.) <br> * Whole document * | 1,2 | |
| Y | --- | 4 | |
| Y | FR-A-1 217 052  (N.V. PHILIPS) <br> * Whole document * <br> --- | 3,8,9 · | |
| Y | DE-C-  223 992  (DELAHAYE) <br> * Whole document * <br> --- | 6,7 | |
| X | CH-A-  336 428  (SINCLAIR) <br> * Whole document * | 1,2 | |
| Y | --- | 3-7 | |
| Y | EP-A-0 074 756  (EATON CORP.) <br> * Whole document * <br> --- | 3,7 | |
| Y | US-A-2 985 992  (DOWDLE) <br> * Whole document * <br> --- | 4,6 | TECHNICAL FIELDS SEARCHED (Int. Cl.4) <br><br> F 16 D  11/00 <br> F 16 D  67/00 <br> B 60 K |
| Y | FR-A-2 309 431  (INTERROLL) <br> * Page 7, line 28; figure 1 * <br> --- | 5 | |
| A | US-A-2 855 768  (PLAND) <br> * Whole document * <br> --- | 1-4,8,9 | |
| A | CH-A-  352 917  (KÄSSBOHRER) <br> * Whole document * <br> ---      -/- | 1-3 | |

The present search report has been drawn up for all claims

| Place of search | Date of completion of the search | Examiner |
|---|---|---|
| THE HAGUE | 30-08-1988 | BALDWIN D.R. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)

European Patent Office

EUROPEAN SEARCH REPORT

Application Number

EP 88 10 7369

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 934 688 (P.A. PLANO)<br>* Whole document *<br>----- | 3,4,8,9 | |

TECHNICAL FIELDS SEARCHED (Int. Cl.4)

The present search report has been drawn up for all claims

| Place of search | Date of completion of the search | Examiner |
|---|---|---|
| THE HAGUE | 30-08-1988 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)